# EUROPÄISCHE PATENTANMELDUNG

(11) **EP 2 754 591 A2**
(43) Veröffentlichungstag der Anmeldung: **16.07.2014**
(21) Anmeldenummer: 13193827.6
(22) Anmeldetag: 21.11.2013
(51) Int. Cl.: B60T 8/40, B60T 8/48

(54) **Aggregat für ein hydraulisches Bremssystem, hydraulisches Bremssystem, Steuervorrichtung zum Zusammenwirken mit einem hydraulischen Bremssystem und Verfahren zum Betreiben eines hydraulischen Bremssystems**

(30) Priorität: 15.01.2013 DE 102013200465
(71) Anmelder: ROBERT BOSCH GMBH, 70442 Stuttgart (DE)
(72) Erfinder: Strengert, Stefan, 70469 Stuttgart (DE); Drotleff, Dirk, 71720 Oberstenfeld (DE); Spoeri, Tobias, 74360 Ilsfeld (DE)

(57) **Zusammenfassung**

Die Erfindung betrifft ein Aggregat (10) für ein hydraulisches Bremssystem eines Fahrzeugs mit einem ersten Teilbremskreis (12) oder Bremskreis (14), welcher an einen Hauptbremszylinder (16) anbindbar oder angebunden ist, an mindestens einen ersten Radbremszylinder (18) anbindbar oder angebunden ist, und welcher ein Druckablassventil (20) umfasst, welches ausgangsseitig an ein Bremsflüssigkeitsreservoir (22) anbindbar oder angebunden ist, wobei der erste Teilbremskreis (12) oder Bremskreis (14) ein erstes Umschaltventil (24) aufweist, über welches der erste Teilbremskreis (12) oder Bremskreis (14) an den Hauptbremszylinder (16) anbindbar oder angebunden ist. Ebenso betrifft die Erfindung ein hydraulisches Bremssystem und eine Steuervorrichtung zum Zusammenwirken mit dem hydraulischen Bremssystem. Des Weiteren betrifft die Erfindung ein Verfahren zum Betreiben eines hydraulischen Bremssystems eines Fahrzeugs.

## Beschreibung

Die Erfindung betrifft ein Aggregat für ein hydraulisches Bremssystem eines Fahrzeugs und ein hydraulisches Bremssystem. Ebenso betrifft die Erfindung eine Steuervorrichtung zum Zusammenwirken mit einem hydraulischen Bremssystem. Des Weiteren betrifft die Erfindung ein Verfahren zum Betreiben eines hydraulischen Bremssystems eines Fahrzeugs.

### Stand der Technik

In der DE 10 2011 005 822 A1 sind Bremssysteme und Verfahren zum Betreiben der Bremssysteme beschrieben. Die Bremssysteme weisen jeweils einen abkoppelbaren Bremskreis auf, welcher über ein Trennventil an einem Hauptbremszylinder angebunden ist. Außerdem ist der abkoppelbare Bremskreis über ein Druckablassventil an einem Bremsflüssigkeitsreservoir angebunden.

### Offenbarung der Erfindung

Die Erfindung schafft ein Aggregat für ein hydraulisches Bremssystem eines Fahrzeugs mit den Merkmalen des Anspruchs 1, ein hydraulisches Bremssystem mit den Merkmalen des Anspruchs 4, eine Steuervorrichtung mit den Merkmalen des Anspruchs 5 und ein Verfahren zum Betreiben eines hydraulischen Bremssystems eines Fahrzeugs mit den Merkmalen des Anspruchs 10.

### Vorteile der Erfindung

Die vorliegende Erfindung ermöglicht es einem Fahrer jederzeit den ersten Bremsdruck in dem ersten Bremskreis durch ein direktes Einbremsen zu erhöhen. Beispielsweise kann der Fahrer bei einem geschlossenen (ersten) Umschaltventil das parallel dazu angeordnete/geschaltete Rückschlagventil überdrücken. Somit ist auch in einer Fehlersituation, beispielsweise nach einem Ausfall des Fahrzeugbordnetzes, noch verlässlich gewährleistet, dass der Fahrer aktiv in den ersten Bremskreis einbremsen kann.

Da der erste Bremskreis selbst nach einem Schließen des ersten Umschaltventils nicht von dem Hauptbremszylinder und damit vom Fahrer abgetrennt ist, können die Nachteile einer vollständigen Abtrennung eines Bremskreises nicht auftreten. Die vorliegende Erfindung umgeht somit die herkömmlicherweise oft auftretenden Nachteile von By-Wire-Bremssystemen.

Zusätzlich ist aufgrund der Anbindung des ersten Bremskreises/Möglichkeit zur Anbindung des ersten Teilbremskreises an das Bremsflüssigkeitsreservoir, beispielsweise über eine Saugleitung, eine Hydraulik gewährleistet, welche es ermöglicht, Volumen/Bremsflüssigkeit über das (steuerbare/regelbare) Druckauslassventil aus dem ersten Bremskreis in das Bremsflüssigkeitsreservoir abzulassen. Auf diese Weise kann durch ein zumindest teilweises Öffnen des Druckauslassventils jederzeit der erste Bremsdruck in dem ersten Bremskreis reduziert werden. Die auf diese Weise reduzierbare Bremswirkung des mindestens einen ersten Radbremszylinders des ersten Bremskreises kann beispielsweise zum Verblenden eines Generator-Bremsmoments mindestens eines Elektromotors genutzt werden. Die vorliegende Erfindung kann somit zusätzlich dazu eingesetzt werden, einen Fahrer zum Gebrauch eines energiesparenden und emissionsärmeren Fahrzeugs anzuregen.

Vorzugsweise umfasst der erste Teilbremskreis oder Bremskreis eine Druckfördereinrichtung umfasst, welche saugseitig an dem Bremsflüssigkeitsreservoir anbindbar oder angebunden ist. Mittels der Druckfördereinrichtung kann Bremsflüssigkeit aus dem Bremsflüssigkeitsreservoir in den ersten Teilbremskreis oder Bremskreis zur Steigerung eines in dem mindestens einen ersten Radbremszylinder vorliegenden Bremsdrucks gefördert werden.

In einer vorteilhaften Ausführungsform des Aggregats umfasst das Aggregat einen zweiten Teilbremskreis oder Bremskreis, welche über ein zweites Umschaltventil an den Hauptbremszylinder anbindbar oder angebunden und an mindestens einen zweiten Radbremszylinder anbindbar oder angebunden ist. Bei einer Verwendung eines derartigen Aggregats in einem Bremssystem hat der Fahrer die Möglichkeit, in beide Bremskreise einzubremsen. Auf diese Weise kann eine hydraulische Last mindestens einer Druckfördereinrichtung/Pumpe der beiden Bremskreise/mindestens eines Motors der mindestens einen Druckfördereinrichtung/Pumpe (selbst bei einer Nichtverfügbarkeit des mindestens einen generatorisch einsetzbaren Elektromotors) gegenüber einem Brake-By-Wire-Bremssystem oder einem Einachs-Brake-By-Wire-Bremssystem deutlich reduziert werden.

Die oben aufgezählten Vorteile sind auch bei einem hydraulischen Bremssystem mit einem derartigen Aggregat gewährleistet.

Außerdem können die beschriebenen Vorteile realisiert werden durch eine Steuervorrichtung zum Zusammenwirken mit einem hydraulischen Bremssystem.

In einer vorteilhaften Ausführungsform der Steuervorrichtung ist die Ansteuereinrichtung dazu ausgelegt, sofern eine als zumindest Teil des Sensorsignals bereitgestellte Größe bezüglich eines Verstellwegs des betätigten Bremsbetätigungselements aus seiner Ausgangsstellung und/oder bezüglich einer Betätigungsstärke der Betätigung des Bremsbetätigungselements kleiner als eine vorgegebene Mindest-Größe ist, das Druckablassventil zumindest zeitweise derart in den zumindest teilgeöffneten Zustand zu steuern, dass ein in dem ersten Bremskreis vorliegender erster Bremsdruck gleich einem Druck in dem Bremsflüssigkeitsreservoir ist. Die Steuervorrichtung realisiert somit in diesem Fall über eine gezielte Ventilansteuerungsstrategie einen "nicht-mechanischen" Leerweg. Der "nicht-mechanische" Leerweg kann bedarfsgerecht und ohne einen mechanischen Leerweg/eine Änderung des mechanischen Leerwegs an ein von dem Fahrer bevorzugtes (standardgemäßes) Bremsbetätigungsgefühl/Pedalgefühl angepasst werden. Die vorteilhafte Auslegung der Steuervorrichtung ermöglicht somit insbesondere einen Verzicht auf einen zusätzlichen mechanischen Leerweg, ohne dass dies mit einer Abweichung von einem standardgemäßen Bremsbetätigungsgefühl/ Pedalgefühl für den Fahrer verbunden wäre. Die vorteilhafte Auslegung der Steuervorrichtung erlaubt deshalb den Einsatz identischer Aktuationskomponenten in konventionellen und in hybrid-varianten einer Baureihe.

Bevorzugter Weise ist die Ansteuereinrichtung zusätzlich dazu ausgelegt, sofern die Größe größer als die vorgegebene Mindest-Größe ist, das Druckablassventil in einen geschlossen Zustand zu steuern. Somit ist gewährleistbar, dass der Fahrer nach einem Überwinden des "nicht-mechanischen" Leerwegs die standardgemäße Rückantwort des Druckaufbaus in dem mindestens einen Bremskreis des hydraulischen Bremssystems während der Betätigung des Bremsbetätigungselements (z.B. eines Bremspedals) spürt.

In einer weiteren vorteilhaften Ausführungsform ist die Ansteuereinrichtung zusätzlich dazu ausgelegt, unter Berücksichtigung zumindest einer bereitgestellten Information bezüglich eines mittels mindestens eines Elektromotors aktuell maximal ausführbaren Kann-Generator-Bremsmoments mindestens eine Druckfördereinrichtung des ersten Bremskreises anzusteuern, so dass, sofern das Kann-Generator-Bremsmoment kleiner als ein aktuell mittels des mindestens einen Elektromotors ausgeführtes Generator-Bremsmoment ist, (zumindest) der ersten Bremsdruck in dem ersten Bremskreis mittels der mindestens einen angesteuerten Druckfördereinrichtung steigerbar ist. Die Steuervorrichtung kann somit zusätzlich dazu genutzt werden, zeitliche Schwankungen des aktuell maximal ausführbaren Kann-Generator-Bremsmoments durch ein entsprechendes Anpassen zumindest des ersten Bremsdrucks in dem ersten Bremskreis zumindest teilweise zu kompensieren.

Des Weiteren kann die Ansteuereinrichtung zusätzlich dazu ausgelegt sein, dass das erste Umschaltventil des ersten Bremskreises und/oder ein zweites Umschaltventil eines zweiten Bremskreises des hydraulischen Bremssystems, welcher über das zweite Umschaltventil an den Hauptbremszylinder angebunden ist und mindestens einen zweiten Radbremszylinder aufweist, derart anzusteuern, dass eine Druckdifferenz zwischen dem ersten Bremsdruck in dem ersten Bremskreis und einem zweiten Bremsdruck in dem zweiten Bremskreis bewirkbar ist. Diese Druckdifferenz kann zum Gewährleisten einer auf die verschiedenen Achsen des Fahrzeugs ausgeglicheneren Bremskraftverteilung genutzt werden, wodurch ein stabileres Abbremsen des Fahrzeugs mit dem hydraulischen Bremssystem realisierbar ist.

Die oben ausgeführten Vorteile sind auch durch ein entsprechendes Ausführen des Verfahrens zum Betreiben eines hydraulischen Bremssystems eines Fahrzeugs realisierbar. Das Verfahren kann entsprechend den Ausführungsformen der Steuervorrichtung weitergebildet werden.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung von Ausführungsformen des Aggregats, des hydraulischen Bremssystems und der Steuervorrichtung; und
- Fig. 2a bis 2d: vier Koordinatensysteme zum Erläutern einer Ausführungsform des Verfahrens zum Betreiben eines hydraulischen Bremssystems eines Fahrzeugs.

### Ausführungsformen der Erfindung

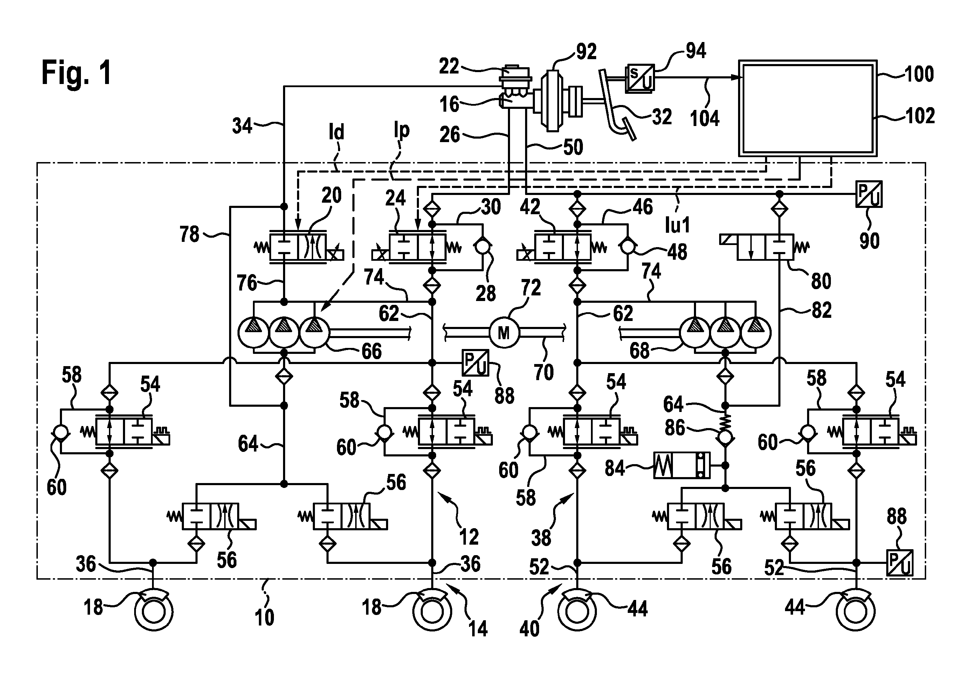

Fig. 1 zeigt eine schematische Darstellung von Ausführungsformen des Aggregats, des hydraulischen Bremssystems und der Steuervorrichtung.

Das in Fig. 1 schematisch dargestellte Aggregat 10 ist in einem hydraulischen Bremssystem eines Fahrzeugs einsetzbar. Das Aggregat 10 kann als kompakte Einheit ausgebildet sein. Ebenso kann das Aggregat 10 jedoch auch aus mehreren voneinander trennbaren Einheiten zusammengesetzt sein. Des Weiteren kann das Aggregat 10 auch eine Untereinheit eines hydraulischen Bremssystems sein, welches nicht von diesem separierbar ist. Unter dem Aggregat 10 muss somit nicht eine aus dem hydraulischen Bremssystem wieder ausbaubare Einheit verstanden werden.

Das Aggregat 10 umfasst zumindest einen ersten Teilbremskreis 12 oder Bremskreis 14, welcher an einem Hauptbremszylinder 16 des hydraulischen Bremssystems anbindbar oder angebunden ist. Außerdem ist der erste Teilbremskreis 12 oder Bremskreis 14 an mindestens einem ersten Radbremszylinder 18 anbindbar oder angebunden. Der erste Teilbremskreis 12 oder Bremskreis 14 kann insbesondere an zwei ersten Radbremszylindern 18 anbindbar oder angebunden sein. Des Weiteren umfasst der erste Teilbremskreis 12 oder Bremskreis 14 ein Druckablassventil 20, welches ausgangsseitig an ein Bremsflüssigkeitsreservoir 22 anbindbar oder angebunden ist.

Vorzugsweise ist das Druckablassventil 20 ein stetig stellbares/stetig steuerbares Ventil. Das Druckablassventil 20 kann auch als ein stetig regelbares Ventil ausgebildet sein. Es wird jedoch darauf hingewiesen, dass die Ausbildbarkeit des Druckablassventils 20 nicht auf einen bestimmten Ventiltyp limitiert ist. Beispielsweise kann das Druckablassventil 20 auch ein Schaltventil sein. Unter dem Bremsflüssigkeitsreservoir 22 kann ein Volumen verstanden werden, in welchem der Atmosphärendruck vorliegt und/oder welches über mindestens eine Austauschbohrung, wie beispielsweise eine Schnüffelbohrung, mit dem Hauptbremszylinder 16 verbunden ist. Das Bremsflüssigkeitsreservoir 22 kann jedoch auch mit einem Hauptbremszylinder 16 mit einem Zentralventil hydraulisch verbunden sein.

Unter dem ersten Teilbremskreis 12 kann beispielsweise ein Bereich des ersten Bremskreises 14 verstanden werden, welcher innerhalb des Aggregats 10 liegt. Ansonsten können die Begriffe erster Teilbremskreis 12 und erster Bremskreis 14 auch als gleichbedeutend interpretiert werden.

Es wird darauf hingewiesen, dass der erste Teilbremskreis 12 oder Bremskreis 14 ein erstes Umschaltventil 24 aufweist, über welches der erste Teilbremskreis 12 oder Bremskreis 14 an dem Hauptbremszylinder 16 anbindbar oder angebunden ist. Beispielsweise kann eine erste Zufuhrleitung 26 zwischen einer (nicht dargestellten) Druckkammer des Hauptbremszylinders 16 und dem ersten Umschaltventil 24 verlaufen. Unter dem ersten Umschaltventil 24 ist insbesondere ein Ventil zu verstehen, welches ein Rückschlagventil 28 in einer parallel zu dem Umschaltventil 24 verlaufenden Bypassleitung 30 aufweist. Das Rückschlagventil 28 ist vorzugsweise so ausgerichtet, dass es mittels eines Drucks in dem Hauptbremszylinder 16 überdrückbar ist.

Der Fahrer des mit dem Aggregat 10/dem hydraulischen Bremssystem ausgestatteten Fahrzeugs hat somit die Möglichkeit, mittels einer Betätigung eines an dem Hauptbremszylinder 16 angebundenen Bremsbetätigungselements 32 jederzeit direkt in den (zumindest den ersten Teilbremskreis 12 umfassenden) ersten Bremskreis 14 einzubremsen. Gleichzeitig kann das Druckablassventil 20 dazu genutzt werden, Bremsflüssigkeit/Volumen aus dem (den ersten Teilbremskreis 12 umfassenden) ersten Bremskreis 14 in das Bremsflüssigkeitsreservoir 22 abzulassen. Somit bietet das Aggregat 10 die Vorteile einer wahlweisen Reduzierbarkeit eines in dem ersten Bremskreis 14 vorliegenden Bremsdrucks ohne eine Auslegung von diesem als By-Wire-Bremskreis. Somit können die Vorteile der wahlweisen Reduzierbarkeit des ersten Bremsdrucks genutzt werden, ohne dass dazu die Nachteile/Probleme eines By-Wire-Bremskreises in Kauf zu nehmen sind.

Das Druckablassventil 20/der erste Teilbremskreis 12 kann beispielsweise über eine Saugleitung 34 mit dem Bremsflüssigkeitsreservoir 22 verbunden sein. Ebenso kann mindestens eine Leitung 36 von dem Aggregat 10/dem ersten Teilbremskreis 12 zu dem mindestens einen ersten Radbremszylinder 18 verlaufen. Die Anbindung des ersten Teilbremskreises 12 an die Komponenten 16, 18 und 22 mittels der Leitungen 26, 34 und 36 ist jedoch nur beispielhaft zu verstehen.

Das Aggregat 10/das hydraulischen Bremssystem der Fig. 1 umfasst auch einen zweiten Teilbremskreis 38 oder Bremskreis 40, welcher über ein zweites Umschaltventil 42 an den Hauptbremszylinder 16 anbindbar/angebunden und an mindestens einen zweiten Radbremszylinder 44 anbindbar /angebunden ist. (Unter dem zweiten Teilbremskreis 38 kann ein Bereich des zweiten Bremskreises 40 innerhalb des Aggregats 10 verstanden werden. Alternativ können die Begriffe zweiter Teilbremskreis 38 und zweiter Bremskreis 40 auch als gleichbedeutend interpretiert werden.) Die Ausstattung des Aggregats 10/des hydraulischen Bremssystems mit dem zweiten Teilbremskreis 38/dem zweiten Bremskreis 40 ist optional.

Auch parallel zu dem zweiten Umschaltventil 42 kann eine Bypassleitung 46 mit einem Rückschlagventil 48, welches mittels des Drucks in dem Hauptbremszylinder 16 überdrückbar ist, verlaufen. Somit hat der Fahrer des mit dem Aggregat 10/dem hydraulischen Bremssystem ausgestatteten Fahrzeugs die Möglichkeit, in beide Bremskreise 14 und 40 direkt einzubremsen. Damit ist selbst bei geschlossenen Umschaltventilen 24 und 42 ein Bremsdruckaufbau in allen Radbremszylindern 18 und 44 verlässlich ausführbar.

Der zweite Teilbremskreis 38/der zweite Bremskreis 40 kann mit zwei zweiten Radbremszylindern 44 verbindbar/verbunden sein. Über eine zweite Zufuhrleitung 50 kann der zweite Teilbremskreis 38/der zweite Bremskreis 40 mit einer Druckkammer des Hauptbremszylinders 16 verbunden sein. Außerdem kann mindestens eine weitere Leitung 52 zwischen dem zweiten Teilbremskreis 38/dem Aggregat 10 und dem mindestens einen zweiten Radbremszylinder 44 des zweiten Bremskreises 40 verlaufen. Die Ausstattung des zweiten Bremskreises 40 mit den Leitungen 50 und 52 ist jedoch nur beispielhaft zu interpretieren.

Die Ausstattung des Aggregats 10 und/oder des hydraulischen Bremssystems mit den im Weiteren beschriebenen vorteilhaften Komponenten ist lediglich optional:

Bei dem Aggregat 10/dem hydraulischen Bremssystem der Fig. 1 ist jedem Radbremszylinder 18 und 44 ein Radeinlassventil 54 zugeordnet, welches über die jeweilige Leitung 36 oder 52 mit diesem verbunden ist. Über eine Aufgabelung der jeweiligen Leitung 36 und 52 ist auch je ein Radauslassventil 56 jedem Radbremszylinder 18 und 44 zugeordnet. Parallel zu jedem Radeinlassventil 54 verläuft eine Bypassleitung 58 mit einem Rückschlagventil 60. Bei einer Ausbildung der Bremskreise 14 und 40 für die Anbindung von je zwei Radbremszylindern 14 oder 44 können die beiden Radeinlassventile 54 eines Bremskreises 14 oder 40 über jeweils eine sich aufzweigende Leitung 62 an das zugeordnete Umschaltventil 24 oder 42 angebunden sein.

Vorzugsweise umfasst der erste Teilbremskreis 12 oder Bremskreis 14 eine Druckfördereinrichtung 66 umfasst, welche saugseitig an dem Bremsflüssigkeitsreservoir 22 anbindbar oder angebunden ist. Auch der zweite Teilbremskreis 38 oder Bremskreis 40 kann mit einer Druckfördereinrichtung 68 ausgestattet sein. Bei der hier beschriebenen Ausbildungsform sind die Druckfördereinrichtungen 66 und 68 der beiden Bremskreise 14 und 40 Pumpen 66 und 68. Allerdings können auch andere Typen von Druckfördereinrichtungen 66 und 68 in mindestens einen Bremskreis 14 oder 40 eingesetzt werden.

Die beiden Radauslassventile 56 eines Bremskreises 14 oder 40 können über eine sich aufzweigende Leitung 64 an eine Saugseite einer ersten Pumpe 66 des ersten Bremskreises 14 oder einer zweiten Pumpe 68 des zweiten Bremskreises 40 angebunden sein. Die beiden Pumpen 66 und 68 können an einer gemeinsamen Welle 70 eines Motors 72 angeordnet sein. Von den Förderseiten der Pumpen 66 und 68 kann je eine Leitung 74 verlaufen, welche in die zugeordnete Leitung 62 mündet.

Außerdem kann die Förderseite der ersten Pumpe 66 des ersten Bremskreises 14 über eine weitere Leitung 76 eingangsseitig mit dem Druckablassventil 20 verbunden sein.

Über eine parallel zu dem Druckablassventil 20 verlaufende weitere Leitung 78 kann die Ansaugseite der ersten Pumpe 66 des ersten Bremskreises 14 zusätzlich mit der Ansaugleitung 34 verbunden sein.

Als Weiterbildung des Aggregats 10/des hydraulischen Bremssystems kann der zweite Bremskreis 40 ein Hochdruckschaltventil 80 aufweisen, welches über eine Verzweigung der Zufuhrleitung 50 an dem Hauptbremszylinder 16 angebunden ist. Ausgangsseitig von dem Hochdruckschaltventil 80 kann eine weitere Leitung 82 verlaufen, welche in die Leitung 64 mündet. Des Weiteren kann der zweite Bremskreis 40 noch eine Speicherkammer 84 haben, welche zwischen den beiden Radauslassventilen 56 des zweiten Bremskreises 40 und einem Mündungspunkt der Leitung 82 angebunden ist. Optionaler Weise kann zwischen dem Mündungspunkt der Leitung 82/der zweiten Pumpe 68 und der Speicherkammer 84 noch ein Überdruckventil 86 eingesetzt sein.

Jeder der beiden Bremskreise 14 und 40 kann mit einem Drucksensor 88 ausgestattet sein. Optionaler Weise kann der zweite Bremskreis 40 noch einen Vordrucksensor 90 haben. Die Ausbildbarkeit des hydraulischen Bremssystems/des Aggregats 10 ist jedoch nicht auf die Ausstattung mit den in Fig. 1 dargestellten Sensoren 88 und 90 limitiert.

Das Bremssystem der Fig. 1 weist einen Bremskraftverstärker 92 auf, welcher zwischen dem als Bremspedal ausgebildeten Bremsbetätigungselement 32 und dem Hauptbremszylinder 16 angeordnet ist. Außerdem hat das Bremssystem noch einen Bremsbetätigungselement-Sensor 94, mittels welchem ein Verstellweg des Bremsbetätigungselements 32 aus seiner Ausgangsstellung und/oder eine Betätigungsstärke einer Betätigung des Bremsbetätigungselements 32 ermittelbar/messbar ist. Der Bremsbetätigungselement-Sensor 94 kann beispielsweise ein Fahrerbremskraftsensor, ein Fahrerbremsdrucksensor und/oder ein Bremsbetätigungswegsensor, wie insbesondere ein Stangenwegsensor, sein. Die Ausbildbarkeit des Bremsbetätigungselement-Sensors 94 ist jedoch nicht auf die hier aufgezählten Sensortypen limitiert. Ebenso ist die Ausstattung des hydraulischen Bremssystems mit dem Bremskraftverstärker 92 und/oder dem Bremsbetätigungselement-Sensor 94 optional.

In Fig. 1 ist auch eine Steuervorrichtung 100 schematisch dargestellt, welche zum Zusammenwirken mit dem hydraulischen Bremssystem ausgebildet ist. Die Steuervorrichtung 100 weist eine Ansteuereinrichtung 102 auf, welche dazu ausgelegt ist, zumindest das Druckablassventil 20 des ersten Bremskreises 14 des hydraulischen Bremssystems mit mindestens einem Druckablassventilsteuersignal Id anzusteuern. Das Ansteuern des Druckablassventils 20 erfolgt unter Berücksichtigung zumindest eines bereitgestellten Sensorsignals 104 des Bremsbetätigungselement-Sensors 94. Die Ansteuereinrichtung 102 ist vor allem dazu ausgelegt, das Druckablassventil 20 in einen zumindest teilgeöffneten Zustand (z.B. in den vollständig geöffneten Zustand) zu steuern, so dass zumindest zeitweise während einer Betätigung des an dem Hauptbremszylinder 16 angebundenen Bremsbetätigungselements 32 Bremsflüssigkeit (aus dem zweiten Bremskreis 14) in das ausgangsseitig an dem Druckablassventil 20 angebundene Bremsflüssigkeitsreservoir 22 verschiebbar ist.

Die Steuervorrichtung 100 kann somit zum wahlweisen Reduzieren eines in dem ersten Bremskreis 14 vorliegenden ersten Bremsdrucks und/oder zum wahlweisen Begrenzen/Verhindern eines Bremsdruckaufbaus in dem ersten Bremskreis 14 eingesetzt werden. Insbesondere kann die Steuervorrichtung 100 dazu genutzt werden, sicherzustellen, dass trotz einer Betätigung des Bremsbetätigungselements 32, durch welche Bremsflüssigkeit aus dem Hauptbremszylinder 16 in den ersten Bremskreis 14 verschoben wird, (nahezu) kein Bremsdruckaufbau in dem mindestens einen ersten Radbremszylinder 18 des ersten Bremskreises 14 stattfindet. Stattdessen kann durch das zumindest teilweise Öffnen des Druckablassventils 20 eine dem aus dem Hauptbremszylinder 16 in den ersten Bremskreis 14 verschobenen Volumen (nahezu) entsprechende Bremsflüssigkeitsmenge in das Bremsflüssigkeitsreservoir 22 zurückgefördert werden.

Bei einer Ausstattung des Hauptbremszylinders 16 mit einem (nicht dargestellten) Schwimmkolben zwischen den beiden Druckkammern der beiden Bremskreise 14 und 40 und bei geöffneten Umschaltventilen 24 und 42 ist zusätzlich durch das zumindest teilweise Öffnen des Druckablassventils 20 ein Bremsdruckaufbau in dem zweiten Bremskreis 40 trotz der Betätigung des Bremsbetätigungselements 32 unterbindbar. Somit ist durch das zumindest teilweise Öffnen des Druckablassventils 20 sicherstellbar, dass in den beiden Bremskreisen 14 und 40 ein Bremsdruck von (nahezu) dem Druck in dem Bremsflüssigkeitsreservoir 22/dem Atmosphärendruck vorliegt. Man kann dies auch als eine Druckregelung auf Hauptbremszylinder-Ebene bei geöffneten Umschaltventilen 24 und 42 umschreiben. Somit ist ein mittels der Radbremszylinder 18 und 44 der beiden Bremskreise 14 und 40 auf mindestens ein zugeordnetes Rad ausübbares Reib-Bremsmoment durch das Ansteuern des Druckablassventils 20 mittels der Steuervorrichtung 100 trotz der Betätigung des Bremsbetätigungselements 32 reduzierbar.

Vorteilhafterweise kann die Reduzierung des Reib-Bremsmoments der Radbremszylinder 18 und 44 zum Einsetzen mindestens eines Elektromotors als Generator genutzt werden. Dabei wird der mindestens eine Elektromotor, welcher häufig auch als elektrischer Antriebsmotor des Fahrzeugs nutzbar ist, so betrieben, dass ein Generator-Bremsmoment zum (zusätzlichen) Abbremsen des Fahrzeugs bewirkt wird. Eine auf diese Weise gewonnene elektrische Energie kann in eine Batterie zurückgespeist werden. Insbesondere kann durch das Reduzieren des Reib-Bremsmoments der Radbremszylinder 18 und 44 mittels der Steuervorrichtung 100 ein vergleichsweise großes Generator-Bremsmoment zum Abbremsen des Fahrzeugs ausgeübt werden, ohne dass dabei ein von dem Fahrer vorgegebenes (Soll-)Gesamt-Bremsmoment überschritten wird. Die Steuervorrichtung 100 kann somit dazu eingesetzt werden, eine möglichst hohe rekuperative Effizienz während des Abbremsens des mit dem hydraulischen Bremssystem ausgestatteten Fahrzeugs zu erzielen. Die Steuervorrichtung 100 trägt somit zur Reduzierung des Kraftstoffverbrauchs und zur Verringerung der Schadstoffemission während einer Fahrt des damit ausgestatteten Fahrzeugs vorteilhaft bei.

Die Steuervorrichtung 100 eignet sich damit besonders gut für eine Verwendung in einem Hybridfahrzeug oder in einem Elektrofahrzeug. Die Einsetzbarkeit der Steuervorrichtung 100 ist jedoch nicht auf einen bestimmten Fahrzeugtyp limitiert.

In einer vorteilhaften Ausführungsform der Steuervorrichtung 100 ist die Ansteuereinrichtung 102 dazu ausgelegt, sofern eine als zumindest Teil des Sensorsignals 104 bereitgestellte Größe bezüglich eines Verstellwegs des betätigten Bremsbetätigungselements 32 aus seiner Ausgangsstellung und/oder bezüglich einer Betätigungsstärke (z.B. die Fahrerbremskraft oder der Bremsbetätigungsdruck) der Betätigung des Bremsbetätigungselements 32 kleiner als eine vorgegebene Mindest-Größe ist, das Druckablassventil 20 zumindest zeitweise derart in den zumindest teilgeöffneten Zustand zu steuern, dass der zumindest in dem ersten Bremskreis 14 vorliegende erste Bremsdruck gleich dem Druck in dem Bremsflüssigkeitsreservoir 22 ist. Insbesondere kann Steuervorrichtung 100 dazu ausgelegt sein, bei einer zunehmenden Größe kleiner als der vorgegebenen Mindest-Größe das Druckablassventil 20 immer in den zumindest teilgeöffneten Zustand, vorzugsweise in den vollständig geöffneten Zustand, zu steuern. Die Außerdem kann die Ansteuereinrichtung 102 zusätzlich dazu ausgelegt sein, sofern die Größe größer als die vorgegebene Mindest-Größe ist, das Druckablassventil 20 in einen geschlossenen Zustand zu steuern.

In diesem Fall realisiert die Steuervorrichtung somit einen "nicht-mechanischen" Leerweg im niederen Verzögerungsbereich. Durch das auf diese Weise bewirkbare Unterbinden des Reib-Bremsmoments im niederen Verzögerungsbereich sind hohe rekuperative Effizienzen gewährleistbar. Der "nicht-mechanische" Leerweg gewährleistet somit, dass im niederen Verzögerungsbereich, d.h. bei einem Verstellweg des Bremsbetätigungselements 32 unter dem Leerweg und/oder einer Fahrerbremskraft/einem Bremsbetätigungsdruck unter einem Schwellwert, die Verzögerung des Fahrzeugs (nahezu) rein regenerativ erfolgt. Somit kann die vom Fahrer angeforderte Verzögerung vollständig zum Aufladen der Batterie genutzt werden.

Im Gegensatz zu einem herkömmlichen mechanischen Leerweg, welcher über die Ausbildung/Anbindung des Bremsbetätigungselements 32 mechanisch ausgebildet ist, ist die konstruktive Umsetzung des "nicht-mechanischen" Leerwegs mit keinerlei baulichen Aufwand verbunden. Der "nicht-mechanische" Leerweg benötigt keinerlei Aktuationskomponenten/mechanische Komponenten, deren Spezifikationen bezüglich der Länge des Leerwegs anzupassen sind. Stattdessen kann bei einem Einsetzen der Steuervorrichtung 100 die gleiche mechanische Anbindung des Bremsbetätigungselements 32/des Bremskraftverstärkers 92 unabhängig von einer Länge des "nicht-mechanischen" Leerwegs genutzt werden. Die Länge des "nicht-mechanischen" Leerwegs kann über eine einfache Umprogrammierung/Umschaltung der Steuervorrichtung 100 variiert oder situationsabhängig (online) angepasst werden. Insbesondere können die gleichen Bremsbetätigungselemente 32 und/oder Bremskraftverstärker 92 an hybridisierten und nicht-hybriden Bremssystemen verwendet werden. Somit kann die Steuervorrichtung 100 dazu genutzt werden, gleiche Typen von Bremsbetätigungselementen 32, Hauptbremszylindern 16 und/oder Bremskraftverstärkern 92 an Bremssysteme mit verschieden-langen Leerwegen anzubinden. Die Steuervorrichtung 100 reduziert somit die Kosten zur Herstellung und zur Montage verschiedener Typen von hydraulischen Bremssystemen.

Durch eine mittels der Steuervorrichtung 100 leicht realisierbare zusätzliche Verlängerung des "nicht-mechanischen" Leerwegs ist es außerdem möglich, in allen Verzögerungsbereichen eine rekuperative Effizienz von (nahezu) 100% darzustellen. Gleichzeitig kann bei einem Einsatz der Steuervorrichtung 100 auf die Verwendung eines Brake-By-Wire-Bremssystems oder eines Einachs-Brake-By-Wire-Bremssystems verzichtet werden.

In einer vorteilhaften Weiterbildung ist die Ansteuereinrichtung 102 zusätzlich dazu ausgelegt, unter Berücksichtigung zumindest einer bereitgestellten Information bezüglich eines mittels des mindestens einen Elektromotors aktuell maximal ausführbaren Kann-Generator-Bremsmoments die mindestens eine Druckfördereinrichtung/ erste Pumpe 66 des ersten Bremskreises 14 anzusteuern. Beispielsweise kann, sofern das Kann-Generator-Bremsmoment (in absehbarer Zeit) kleiner als ein aktuell mittels des mindestens einen Elektromotors ausgeführtes Generator-Bremsmoment wird, der erste Bremsdruck in dem ersten Bremskreis 14 mittels der mindestens einen von einem Pumpensteuersignal Ip angesteuerten ersten Pumpe 66 steigerbar sein. Optionaler Weise kann die Ansteuereinrichtung 102 zusätzlich zum Ansteuern einer weiteren Druckfördereinrichtung/der zweiten Pumpe 68 des zweiten Bremskreises 14 ausgebildet sein.

Die Steuervorrichtung 100 realisiert somit auch eine Förderhydraulik zum Einbringen eines Volumens von Bremsflüssigkeit in den ersten Bremskreis 14 mittels der mindestens einen ersten Pumpe 66. Dieses zusätzlich eingebrachte Volumen kann dazu genutzt werden, eine entfallende Einsetzbarkeit des mindestens einen Elektromotors, beispielsweise aufgrund einer Fahrzeuggeschwindigkeit unter einer das generatorische Betreiben des mindestens einen Elektromotors noch erlaubenden MindestGeschwindigkeit und/oder einer vollständigen Aufladung der Batterie, zu kompensieren. Durch das in den ersten Bremskreis 14 zurück gebrachte Volumen kann bei einem Hauptbremszylinder 16 mit einem Schwimmkolben und bei offenen Umschaltventilen 24 und 42 auch der in dem zweiten Bremskreis 40 vorliegende zweite Bremsdruck (wieder) gesteigert werden. Somit können alle Radbremszylinder 18 und 44 zum Kompensieren der entfallenden Einsetzbarkeit des mindestens einen Elektromotors genutzt werden.

Optionaler Weise kann die Ansteuereinrichtung 102 zusätzlich dazu ausgelegt sein, das erste Umschaltventil 42 des ersten Bremskreises 14 und/oder das zweite Umschaltventil 42 des zweiten Bremskreises 40 mittels eines Umschaltventilsteuersignals Iu1 derart anzusteuern, dass eine Druckdifferenz zwischen dem ersten Bremsdruck in dem ersten Bremskreis 14 und dem zweiten Bremsdruck in dem zweiten Bremskreis 40 bewirkbar ist. Auf diese Weise ist eine stabilere Bremskraftverteilung bewirkbar. Die Steuervorrichtung 100 kann auch zum zusätzlichen Ansteuern mindestens eines der Ventile 54, 56 und 80 und/oder des Bremskraftverstärkers 92 ausgelegt sein. Außerdem kann die Steuervorrichtung 100 in ein ESP-System oder in ein anderes Steuergerät integriert sein.

In einer vorteilhaften Anwendung des Bremssystems können die zwei Radbremszylinder 18 des ersten Bremskreises 14 einer gemeinsamen Achse, insbesondere der Hinterachse des Fahrzeugs, zugeordnet sein. In diesem Fall sind die beiden Radbremszylinder 44 des zweiten Bremskreises 40 der Vorderachse des Fahrzeugs zugeordnet. Das in Fig. 1 dargestellte Bremssystem ist jedoch nicht auf eine derartige Zuordnung der Radbremszylinder 18 und 44 limitiert. Ebenso ist das Bremssystem nicht auf eine parallele Bremskreisaufteilung (II-Bremskreisaufteilung) beschränkt. Beispielsweise kann das Bremssystem auch für eine X-Bremskreisaufteilung genutzt werden.

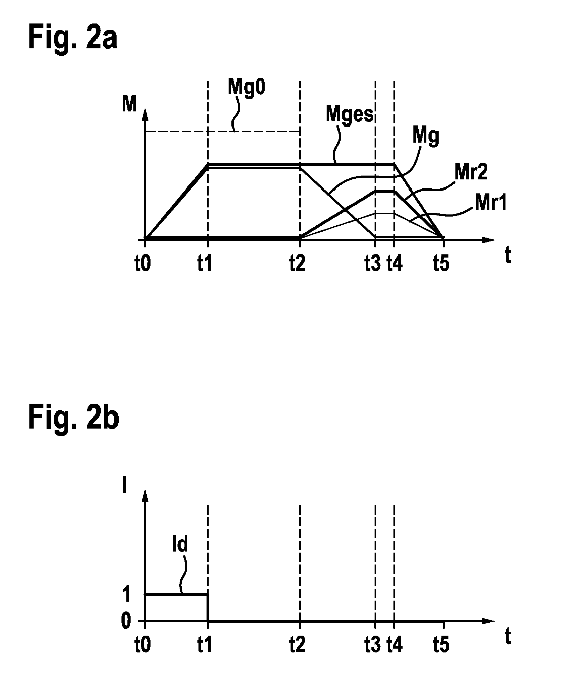

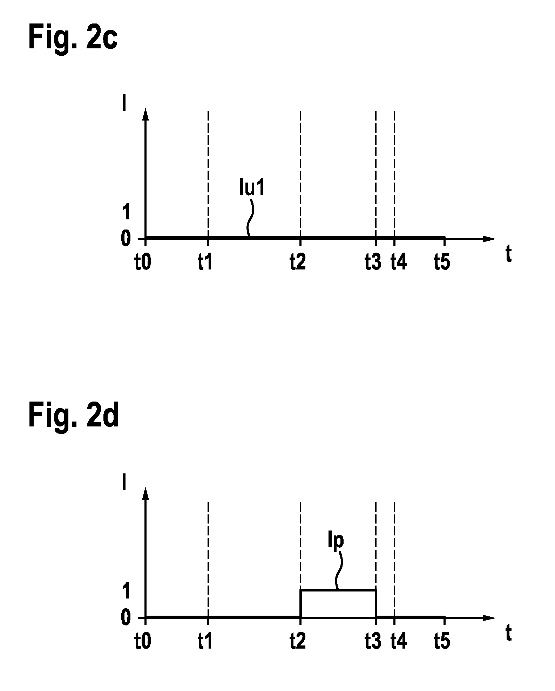

Fig. 2a bis 2d zeigen vier Koordinatensysteme zum Erläutern einer Ausführungsform des Verfahrens zum Betreiben eines hydraulischen Bremssystems eines Fahrzeugs. Die Abszissen der Koordinatensysteme der Fig. 2a bis 2d sind die Zeitachse t. Die Ordinate der Fig. 2a ist ein Bremsmoment M. Mittels der Ordinaten der Koordinatensysteme der Fig. 2b bis 2d sind normierte Stromstärken I wiedergegeben.

Das im Weiteren beschriebene Verfahren kann beispielsweise mittels des oben ausgeführten hydraulischen Bremssystems und/oder mittels der erläuterten Steuervorrichtung durchgeführt werden. Die Ausführbarkeit des Verfahrens ist jedoch nicht auf die Verwendung eines derartigen hydraulischen Bremssystems und/oder der Steuervorrichtung limitiert.

Bei einem Ausführen des Verfahrens wird ein Druckablassventil eines ersten Bremskreises des hydraulischen Bremssystems, welcher über ein erstes Umschaltventil des ersten Bremskreises an einem Hauptbremszylinder des hydraulischen Bremssystems angebunden ist und mindestens einen ersten Radbremszylinder aufweist, in einem zumindest teilgeöffneten Zustand zumindest zeitweise während einer Betätigung eines an dem Hauptbremszylinder angebundenen Bremsbetätigungselements gesteuert. Dies geschieht zum Verschieben von Bremsflüssigkeit in ein ausgangsseitig an dem Druckablassventil angebundenes Bremsflüssigkeitsreservoir.

Der in dem vorausgehenden Absatz beschriebene Vorgang wird beispielsweise zwischen den Zeiten t0 und t1 ausgeführt. Vor dem Zeitpunkt t0 betätigt ein Fahrer des mit dem hydraulischen Bremssystem ausgestatteten Fahrzeugs das Bremsbetätigungselement nicht. Ab dem Zeitpunkt t0 betätigt der Fahrer das Bremsbetätigungselement und verschiebt auf diese Weise Bremsflüssigkeit aus dem Hauptbremszylinder zumindest in den ersten Bremskreis. Allerdings wird zwischen den Zeiten t0 und t1 das Druckablassventil in den geöffneten Zustand gesteuert, so dass das aus dem Hauptbremszylinder in den ersten Bremskreis geschobene Volumen über das geöffnete Druckablassventil in das Bremsflüssigkeitsreservoir verschoben wird.

Sofern das Druckablassventil als stromlos geschlossenes Ventil ausgebildet ist, kann zum Öffnen des Druckablassventils ein Druckablassventilsteuersignal Id ungleich Null zwischen den Zeiten t0 und t1 an das Druckablassventil bereitgestellt werden. Die Ausbildung des Druckablassventils als stromlos geschlossenes Ventil ist vorteilhaft, aber optional.

Obwohl der Fahrer zwischen den Zeiten t0 und t1 ein steigerndes (Soll-)Gesamt-Bremsmoment Mges anfordert, bleibt ein in dem ersten Bremskreis vorliegender erster Bremsdruck (nahezu) gleich Null. Deshalb ist auch ein mittels des mindestens einen ersten Radbremszylinders des ersten Bremskreises auf mindestens ein Rad ausgeübtes erstes Reib-Bremsmoment Mr1 zwischen den Zeiten t0 und t1 (nahezu) gleich Null. Auch in einem zweiten Bremskreis des hydraulischen Bremssystems, welcher über ein zweites Umschaltventil an dem Hauptbremszylinder angebunden ist und mindestens einen zweiten Radbremszylinder aufweist, kann zwischen den Zeiten t0 und t1 ein zweiter Bremsdruck von (ungefähr) Null gewährleistet werden. Dies ist bei einer Ausstattung des Hauptbremszylinders mit einem Schwimmkolben automatisch gewährleistet, sofern die beiden Umschaltventile zwischen den Zeiten t0 und t1 offen gehalten werden. Bei einer Ausbildung des ersten Umschaltventils/zweiten Umschaltventils als stromlos offenes Ventil kann beispielsweise ein Umschaltventilsteuersignal Iu1 gleich Null zwischen den Zeiten t0 und t1 an das erste Umschaltventil/das zweite Umschaltventil bereitgestellt werden. Somit kann zwischen den Zeiten t0 und t1 auch ein von dem mindestens einen zweiten Radbremszylinder des zweiten Bremskreises bewirktes zweites Reib-Bremsmoment Mr2 auf (nahezu) Null gehalten werden.

Die entfallene Bremswirkung zumindest des mindestens einen ersten Radbremszylinders des ersten Bremskreises kann zum generatorischen Einsetzen mindestens eines Elektromotors genutzt werden. Somit ist zwischen den Zeiten t0 und t1, sofern ein maximal ausführbares Kann-Generator-Bremsmoment Mg0 größer als das von dem Fahrer angeforderte Gesamt-Bremsmoment Mges ist, ein Generator-Bremsmoment Mg (ungefähr) gleich dem Gesamt-Bremsmoment Mges ausführbar. Die von dem Fahrer angeforderte Fahrzeugverzögerung kann somit zwischen den Zeiten t0 und t1 rein rekuperativ ausgeführt werden.

In einer besonders vorteilhaften Ausführungsform des Verfahrens wird, sofern ein Verstellweg des betätigten Bremsbetätigungselements aus seiner Ausgangsstellung kleiner als ein vorgegebener Mindest-Verstellweg ist und/oder eine Betätigungsstärke der Betätigung des Bremsbetätigungselements kleiner als eine vorgegebene Mindest-Betätigungsstärke ist, das Druckablassventil derart zumindest zeitweise in dem zumindest teilgeöffneten Zustand gesteuert, dass ein in dem ersten Bremskreis vorliegender erster Bremsdruck gleich einem Druck in dem Bremsflüssigkeitsreservoir ist. Insbesondere kann bei einem zunehmenden Verstellweg größer Null aber kleiner als der Mindest-Verstellweg und/oder bei einer steigenden Betätigungsstärke größer Null doch kleiner als die Mindest-Betätigungsstärke das Druckablassventil zumindest in den teilgeöffneten Zustand, vorzugsweise in den vollständig geöffneten Zustand, gesteuert werden. Außerdem kann, sofern der Verstellweg des betätigten Bremsbetätigungselements aus seiner Ausgangsstellung größer als der vorgegebene Mindest-Verstellweg ist und/oder die Betätigungsstärke der Betätigung des Bremsbetätigungselements größer als die vorgegebene Mindest-Betätigungsstärke ist, das Druckablassventil in einem geschlossenen Zustand gesteuert werden.

Somit kann auch mittels des Verfahrens der oben schon erläuterte "nicht-mechanische" Leerweg realisiert werden. Dieser kann vorteilhafte Weise im Jump-in-Bereich realisiert werden, innerhalb welchem der Fahrer keine Rückwirkung am Bremsbetätigungselement (Pedalrückwirkungen) spürt. Außerhalb des Jump-in-Bereichs kann in Kombination mit einer aktiven Bremskraftverstärkung durch eine Rücknahme der Verstärkerkraft trotz eines reduzierten Hauptbremszylinder-Innendrucks dem Fahrer eine standardgemäße Rückwirkung simuliert werden.

Bei dem in Fig. 2a bis 2d beschriebenen Bremsverlaufs bleibt das vom Fahrer angeforderte Gesamt-Bremsmoment Mges zwischen den Zeiten t1 und t2 konstant. Trotz eines Schließens des Druckablassventils zwischen den Zeiten t1 und t2 können die Reib-Bremsmomente Mr1 und Mr2 gleich Null gehalten werden. Somit kann die vom Fahrer vorgegebene Fahrzeugverzögerung auch zwischen den Zeiten t1 und t2 rein rekuperativ ausgeführt werden.

Ab der Zeit t2 wird der rein rekuperative Bremsvorgang beendet. Dazu wird das Generator-Bremsmoment Mg zwischen den Zeiten t2 und t3 auf Null heruntergefahren. Um die entfallende Bremswirkung des mindestens einen Elektromotors zu kompensieren, wird mindestens eine Druckfördereinrichtung/Pumpe des ersten Bremskreises zum Steigern des ersten Bremsdrucks in dem ersten Bremskreis aktiviert. Dies geschieht insbesondere, sofern das mittels des mindestens einen Elektromotors aktuell maximal ausführbare Kann-Generator-Bremsmoment Mg0 (in absehbarer Zeit) kleiner als das aktuell ausgeführte Generator-Bremsmoment Mg wird. Vorteilhafterweise wird, sofern das mittels des mindestens einen Elektromotors aktuell maximal ausführbare Kann-Generator-Bremsmoment Mg0 kleiner als das aktuell mittels des mindestens einen Elektromotors ausgeführte Generator-Bremsmoment Mg wird, die mindestens eine Druckfördereinrichtung des als Schwimmkreis genutzten ersten Bremskreises zum Steigern des ersten Bremsdrucks in dem ersten Bremskreis und zum Steigern des zweiten Bremsdrucks in einen als Stangenkreis genutzten zweiten Bremskreis aktiviert. Durch das Aktivieren der mindestens einen Druckfördereinrichtung/Pumpe des ersten Bremskreises kann bei einem Hauptbremszylinder mit einem Schwimmkolben und bei einem Vorliegen der beiden Umschaltventile in einem geöffneten Zustand automatisch der in dem zweiten Bremskreis vorliegende zweite Bremsdruck mitgesteigert werden. Die Reib-Bremsmomente Mr1 und Mr2 nehmen deshalb zwischen den Zeiten t2 und t3 stetig zu. Das Aktivieren der mindestens einen Pumpe des ersten Bremskreises kann beispielsweise durch ein Pumpensteuersignal Ip ungleich Null zwischen den Zeiten t2 und t3 erfolgen.

Die Reib-Bremsmomente Mr1 und Mr2 können bei einer Verwendung verschiedener Radbremszylinder in den Bremskreisen unterschiedliche Werte aufweisen. Auch können das erste Umschaltventil des ersten Bremskreises und/oder das zweite Umschaltventil des zweiten Bremskreises derart angesteuert werden, dass eine Druckdifferenz zwischen dem ersten Bremsdruck in dem ersten Bremskreis und dem zweiten Bremsdruck in dem zweiten Bremskreis bewirkt wird. Unterstützend können auch die Radeinlassventile des ersten Bremskreises und/oder des zweiten Bremskreises mit angesteuert werden.
Auf diese Weise ist eine stabilisierende Reib-Bremskraftaufteilung realisierbar.

Insbesondere können auf diese Weise mögliche negative Einflüsse auf die Bremskraftverteilung durch den mindestens einen Elektromotor, welcher sein Generator-Bremsmoment Mg vorrangig auf eine Achse absetzt, ausgeglichen/kompensiert werden. Dadurch ist es trotz der Verwendung mindestens eines derartigen Elektromotors möglich, beim Verblenden eine ideale/gewünschte Bremskraftverteilung (nahezu) einzuhalten.

Ab der Zeit t3 wird die mindestens eine Pumpe des ersten Bremskreises wieder gestoppt. Die Reib-Bremsmomente Mr1 und Mr2 bleiben somit bei einem konstanten Gesamt-Bremsmoment Mges gleich. Ab einer Zeit t4 reduziert der Fahrer das angeforderte Gesamt-Bremsmoment, bis es zur Zeit t5 gleich Null wird. Aufgrund eines Vorliegens der Umschaltventile in einem geöffneten Zustand wird zwischen den Zeiten t4 und t5 automatisch Volumen in den Hauptbremszylinder zurücktransferiert. Dies gewährleistet auch eine Reduzierung der Reib-Bremsmomente Mr1 und Mr2 (nahezu) auf Null bis zur Zeit t5.

## Patentansprüche

1. Aggregat (10) für ein hydraulisches Bremssystem eines Fahrzeugs mit:
einem ersten Teilbremskreis (12) oder Bremskreis (14), welcher an einen Hauptbremszylinder (16) anbindbar oder angebunden ist, an mindestens einen ersten Radbremszylinder (18) anbindbar oder angebunden ist, und welcher ein Druckablassventil (20) umfasst, welches ausgangsseitig an ein Bremsflüssigkeitsreservoir (22) anbindbar oder angebunden ist;
**dadurch gekennzeichnet, dass**
der erste Teilbremskreis (12) oder Bremskreis (14) ein erstes Umschaltventil (24) aufweist, über welches der erste Teilbremskreis (12) oder Bremskreis (14) an den Hauptbremszylinder (16) anbindbar oder angebunden ist.

2. Aggregat (10) nach Anspruch 1, wobei der erste Teilbremskreis (12) oder Bremskreis (14) eine Druckfördereinrichtung (66) umfasst, welche saugseitig an dem Bremsflüssigkeitsreservoir (22) anbindbar oder angebunden ist.

3. Aggregat (10) nach Anspruch 1 oder 2, wobei das Aggregat (10) einen zweiten Teilbremskreis (38) oder Bremskreis (40) umfasst, welcher über ein zweites Umschaltventil (42) an den Hauptbremszylinder (16) anbindbar oder angebunden und an mindestens einen zweiten Radbremszylinder (44) anbindbar oder angebunden ist.

4. Hydraulisches Bremssystem mit einem Aggregat (10) nach einem der vorhergehenden Ansprüche.

5. Steuervorrichtung (100) zum Zusammenwirken mit einem hydraulischen Bremssystem nach Anspruch 4, mit:
einer Ansteuereinrichtung (102), welche dazu ausgelegt ist, unter Berücksichtigung zumindest eines bereitgestellten Sensorsignals (104) eines Bremsbetätigungselement-Sensors (94) das Druckablassventil (20) des ersten Bremskreises (14) des hydraulischen Bremssystems, welcher über das erste Umschaltventil (24) des ersten Bremskreises (14) an den Hauptbremszylinder (16) des hydraulischen Bremssystems angebunden ist und mindestens den ersten Radbremszylinder (18) aufweist, in einen zumindest teilgeöffneten Zustand zu steuern, so dass zumindest zeitweise während einer Betätigung eines an dem Hauptbremszylinder (16) angebundenen Bremsbetätigungselements (32) Bremsflüssigkeit in das ausgangsseitig an dem Druckablassventil (20) angebundene Bremsflüssigkeitsreservoir (22) verschiebbar ist.

6. Steuervorrichtung (100) nach Anspruch 5, wobei die Ansteuereinrichtung (102) dazu ausgelegt ist, sofern eine als zumindest Teil des Sensorsignals (104) bereitgestellte Größe bezüglich eines Verstellwegs des betätigten Bremsbetätigungselements (32) aus seiner Ausgangsstellung und/oder bezüglich einer Betätigungsstärke der Betätigung des Bremsbetätigungselements (32) kleiner als eine vorgegebene Mindest-Größe ist, das Druckablassventil (20) zumindest zeitweise derart in den zumindest teilgeöffneten Zustand zu steuern, dass ein in dem ersten Bremskreis (14) vorliegender erster Bremsdruck gleich einem Druck in dem Bremsflüssigkeitsreservoir (22) ist.

7. Steuervorrichtung (100) nach Anspruch 6, wobei die Ansteuereinrichtung (102) zusätzlich dazu ausgelegt ist, sofern die Größe größer als die vorgegebene Mindest-Größe ist, das Druckablassventil (20) in einen geschlossenen Zustand zu steuern.

8. Steuervorrichtung (100) nach einem der Ansprüche 5 bis 7, wobei die Ansteuereinrichtung (102) zusätzlich dazu ausgelegt ist, unter Berücksichtigung zumindest einer bereitgestellten Information bezüglich eines mittels mindestens eines Elektromotors aktuell maximal ausführbaren Kann-Generator-Bremsmoments (Mg0) mindestens eine Druckfördereinrichtung (66) des ersten Bremskreises (14) anzusteuern, so dass, sofern das Kann-Generator-Bremsmoment (Mg0) kleiner als ein aktuell mittels des mindestens einen Elektromotors ausgeführtes Generator-Bremsmoment (Mg) ist, der erste Bremsdruck in dem ersten Bremskreis (14) mittels der mindestens einen angesteuerten Druckfördereinrichtung (66) steigerbar ist.

9. Steuervorrichtung (100) nach einem der Ansprüche 5 bis 8, wobei die Ansteuereinrichtung (102) zusätzlich dazu ausgelegt ist, das erste Umschaltventil (24) des ersten Bremskreises (14) und/oder ein zweites Umschaltventil (42) eines zweiten Bremskreises (40) des hydraulischen Bremssystems, welcher über das zweite Umschaltventil (42) an den Hauptbremszylinder (16) angebunden ist und mindestens einen zweiten Radbremszylinder (44) aufweist, derart anzusteuern, dass eine Druckdifferenz zwischen dem ersten Bremsdruck in dem ersten Bremskreis (14) und einem zweiten Bremsdruck in dem zweiten Bremskreis (40) bewirkbar ist.

10. Verfahren zum Betreiben eines hydraulischen Bremssystems eines Fahrzeugs **gekennzeichnet durch** den Schritt:
Steuern eines Druckablassventils (20) eines ersten Bremskreises (14) des hydraulischen Bremssystems, welcher über ein erstes Umschaltventil (24) des ersten Bremskreises (14) an einen Hauptbremszylinder (16) des hydraulischen Bremssystems angebunden ist und mindestens einen ersten Radbremszylinder (18) aufweist, in einen zumindest teilgeöffneten Zustand zumindest zeitweise während einer Betätigung eines an dem Hauptbremszylinder (16) angebundenen Bremsbetätigungselements (32) zum Verschieben von Bremsflüssigkeit in ein ausgangsseitig an dem Druckablassventil (20) angebundenes Bremsflüssigkeitsreservoir (22).

11. Verfahren nach Anspruch 10, wobei, sofern ein Verstellweg des betätigten Bremsbetätigungselements (32) aus seiner Ausgangsstellung kleiner als ein vorgegebener Mindest-Verstellweg ist und/oder eine Betätigungsstärke der Betätigung des Bremsbetätigungselements (32) kleiner als eine vorgegebene Mindest-Betätigungsstärke ist, das Druckablassventil (20) derart zumindest zeitweise in den zumindest teilgeöffneten Zustand gesteuert wird, dass ein in dem ersten Bremskreis (14) vorliegender erster Bremsdruck gleich einem Druck in dem Bremsflüssigkeitsreservoir (22) ist.

12. Verfahren nach Anspruch 11, wobei, sofern der Verstellweg des betätigten Bremsbetätigungselements (32) aus seiner Ausgangsstellung größer als der vorgegebene Mindest-Verstellweg ist und/oder die Betätigungsstärke der Betätigung des Bremsbetätigungselements (32) größer als die vorgegebene Mindest-Betätigungsstärke ist, das Druckablassventil (20) in einen geschlossenen Zustand gesteuert wird.

13. Verfahren nach einem der Ansprüche 10 bis 12, wobei, sofern ein mittels mindestens eines Elektromotors aktuell maximal ausführbares Kann-Generator-Bremsmoment(Mg0) kleiner als ein aktuell mittels des mindestens einen Elektromotors ausgeführtes Generator-Bremsmoment (Mg) wird, mindestens eine Druckfördereinrichtung (66) des ersten Bremskreises (14) zum Steigern des ersten Bremsdrucks in dem ersten Bremskreis (14) aktiviert wird.

14. Verfahren nach Anspruch 13, wobei, sofern das mittels des mindestens einen Elektromotors aktuell maximal ausführbare Kann-Generator-Bremsmoment (Mg0) kleiner als das aktuell mittels des mindestens einen Elektromotors ausgeführte Generator-Bremsmoment (Mg) wird, die mindestens eine Druckfördereinrichtung (66) des als Schwimmkreis genutzten ersten Bremskreises (14) zum Steigern des ersten Bremsdrucks in dem ersten Bremskreis (14) und zum Steigern eines zweiten Bremsdrucks in einen als Stangenkreis genutzten zweiten Bremskreis (40) aktiviert wird.

15. Verfahren nach einem der Ansprüche 10 bis 14, wobei das erste Umschaltventil (24) des ersten Bremskreises (14) und/oder ein zweites Umschaltventil (42) des zweiten Bremskreises (40) des hydraulischen Bremssystems, welcher über das zweite Umschaltventil (42) an den Hauptbremszylinder (16) angebunden ist und mindestens einen zweiten Radbremszylinder (44) aufweist, derart angesteuert werden, dass eine Druckdifferenz zwischen dem ersten Bremsdruck in dem ersten Bremskreis (14) und dem zweiten Bremsdruck in dem zweiten Bremskreis (40) bewirkt wird.
